(19) **Europäisches Patentamt**

**European Patent Office**

**Office européen des brevets**

(11) **EP 0 968 857 B1**

(12) **FASCICULE DE BREVET EUROPEEN**

(45) Date de publication et mention
de la délivrance du brevet:
**07.08.2002 Bulletin 2002/32**

(51) Int Cl.$^7$: **B60H 1/00**

(21) Numéro de dépôt: **99111311.9**

(22) Date de dépôt: **10.06.1999**

(54) **Boîtier de chauffage et/ou climatisation de véhicule automobile à performances acoustiques améliorées**

Gehäuse einer Heizung und/oder einer Klimaanlage eines Kraftfahrzeugs mit verbesserten akustischen Eigenschaften

Vehicle heating and/or airconditioning housing with improved acoustic performances

(84) Etats contractants désignés:
**DE ES GB IT**

(30) Priorité: **29.06.1998 FR 9808234**

(43) Date de publication de la demande:
**05.01.2000 Bulletin 2000/01**

(73) Titulaire: **VALEO CLIMATISATION
78321 La Verrière (FR)**

(72) Inventeur: **Majchrzak, Jean-Pierre
78160 Marly Le Roi (FR)**

(56) Documents cités:
**EP-A- 0 800 030**         **US-A- 2 225 398**

- **PATENT ABSTRACTS OF JAPAN vol. 095, no. 011, 26 décembre 1995 (1995-12-26) & JP 07 228128 A (NIPPONDENSO CO LTD), 29 août 1995 (1995-08-29)**
- **PATENT ABSTRACTS OF JAPAN vol. 012, no. 078 (M-675), 11 mars 1988 (1988-03-11) & JP 62 218743 A (MATSUSHITA ELECTRIC IND CO LTD), 26 septembre 1987 (1987-09-26)**
- **PATENT ABSTRACTS OF JAPAN vol. 009, no. 249 (M-419), 5 octobre 1985 (1985-10-05) & JP 60 099948 A (NIPPON DENSO KK), 3 juin 1985 (1985-06-03)**
- **PATENT ABSTRACTS OF JAPAN vol. 096, no. 002, 29 février 1996 (1996-02-29) & JP 07 251628 A (TOYODA SPINNING & WEAVING CO LTD;OTHERS: 01), 3 octobre 1995 (1995-10-03)**
- **PATENT ABSTRACTS OF JAPAN vol. 013, no. 048 (M-793), 3 février 1989 (1989-02-03) & JP 63 255117 A (NIPPON DENSO CO LTD), 21 octobre 1988 (1988-10-21)**

## Description

L'invention concerne un boîtier de chauffage et/ou climatisation de véhicule automobile.

On connaît déjà des boîtiers de ce type qui comprennent des parois délimitant des conduits de circulation d'un flux d'air pulsé, au moins un échangeur de chaleur propre à réchauffer ou refroidir le flux d'air, et des volets de distribution logés dans le boîtier pour contrôler le flux d'air dans les conduits de circulation.

Le document EP-A-0800030 décrit au moins implicitement les caractéristiques des préambules de la revendication 1.

Un tel boîtier de chauffage et/ou climatisation est alimenté en flux d'air pulsé par l'intermédiaire d'un groupe moto-ventilateur muni d'une turbine centrifuge apte à aspirer de l'air extérieur et/ou de l'air recirculé provenant de l'habitacle du véhicule et à refouler un flux d'air sous pression dans le boîtier.

Ce flux d'air pulsé traverse ensuite le boîtier précité, lequel loge au moins un échangeur de chaleur (radiateur et éventuellement évaporateur) permettant de réchauffer ou refroidir l'air qui sera ensuite délivré à l'habitacle par divers conduits et bouches de distribution.

Dans une installation de chauffage-climatisation comprenant un groupe moto-ventilateur alimentant un boîtier du type défini précédemment, il existe différentes sources qui engendrent du bruit, lequel peut aisément se propager jusqu'à l'habitacle par les divers conduits de distribution. Il est donc important de réduire ce bruit à une valeur minimale pour améliorer le confort des occupants du véhicule.

En dehors du bruit généré par le groupe moto-ventilateur lui-même, la demanderesse a constaté que du bruit était généré également par le flux d'air sous pression qui traverse le boîtier.

L'un des buts de l'invention est de procurer un boîtier de chauffage et/ou climatisation du type défini ci-dessus, dans lequel le bruit peut être réduit à une valeur minimale, afin d'améliorer les performances acoustiques du boîtier et, en conséquence, le confort des passagers du véhicule.

L'invention propose à cet effet un boîtier du type défini dans la revendication 1.

Il a été constaté en effet que ces moyens d'absorption de bruits d'écoulement permettent de réduire les bruits générés par le flux d'air et donc d'améliorer notablement les performances acoustiques du boîtier.

Sans vouloir être lié par une théorie particulière, il semble que ces moyens d'absorption de bruits d'écoulement permettent d'atténuer les fréquences relatives à des fluctuations de pression qui s'établissent dans le boîtier, et plus précisément dans les différents conduits du boîtier, dans un sens transversal à celui de l'écoulement du flux d'air.

Il est important que ces moyens d'absorption soient convenablement disposés et dimensionnés pour éviter un effet d'amplification de bruit qui serait contraire au but recherché.

Avantageusement, le boîtier étant obtenu par moulage d'une matière plastique, les moyens d'absorption sont prévus sur au moins une paroi latérale du boîtier, qui s'étend transversalement au sens de démoulage.

De façon préférentielle, les moyens d'absorption de bruits d'écoulement sont réalisés sous la forme de résonateurs de Helmholtz dans lesquels les orifices traversent chacun la paroi du boîtier en formant un col qui communique avec la cavité formée à l'extérieur du boîtier.

Selon une autre caractéristique de l'invention, le col a une section transversale A choisie, une longueur corrigée L' choisie, tandis que la cavité possède un volume V choisi, de telle sorte que la fréquence sonore absorbée F soit définie par la relation suivante :

$$F = \frac{C}{2\Pi} \sqrt{\frac{A}{V x L'}},$$

dans laquelle C désigne la vitesse de l'onde sonore.

De façon typique, la longueur du col correspond à l'épaisseur de la paroi et est de l'ordre de 2 mm.

Selon une autre caractéristique avantageuse, l'une au moins des parois du boîtier comporte en outre des tubes quart d'onde situés de préférence à proximité des moyens d'absorption de bruits d'écoulement.

Il a été constaté en effet que la présence de tels tubes quart d'onde permet d'améliorer encore les performances acoustiques du boîtier.

Avantageusement, chaque tube quart d'onde s'étend vers l'extérieur du boîtier et comprend une extrémité ouverte débouchant dans la paroi du boîtier, et une extrémité opposée fermée.

Les tubes quart d'onde sont, le cas échéant, remplis au moins en partie d'un matériau absorbant, en particulier d'une mousse à cellules ouvertes. La présence de ce matériau absorbant permet de ne pas perturber la circulation du flux d'air le long de la paroi équipée des tubes quart d'onde, et permet en outre à ces derniers d'exercer leur effet d'absorption acoustique.

De façon typique, chaque tube quart d'onde s'étend sur une longueur L choisie telle que la fréquence absorbée F0 soit définie par la relation suivante :

$$F0 = \frac{C}{4L}$$

dans laquelle C désigne la vitesse de l'onde sonore.

Selon une autre caractéristique de l'invention, l'une au moins des régions de fluctuation de pression est située à la jonction d'un conduit d'air froid et d'un conduit d'air chaud qui sont contrôlés par un volet de mixage.

Ces régions de fluctuation de pression peuvent être situées en d'autres endroits du boîtier, notamment dans un conduit d'entrée en amont d'un évaporateur de climatisation, ou encore au voisinage d'un volet contrôlant l'accès d'un conduit de sortie desservant des bouches de distribution.

Dans la description qui suit, faite seulement à titre d'exemple, on se réfère aux dessins annexés, sur lesquels :

- la figure 1 est une vue en coupe médiane d'un boîtier de chauffage et/ou climatisation de véhicule automobile, réalisé selon l'invention ;

- la figure 2 est une vue schématique en coupe selon la ligne II-II de la figure 1 ;

- la figure 3 illustre un détail de la figure 2, représenté à échelle agrandie ; et

- la figure 4 illustre un autre détail de la figure 2, représenté aussi à échelle agrandie.

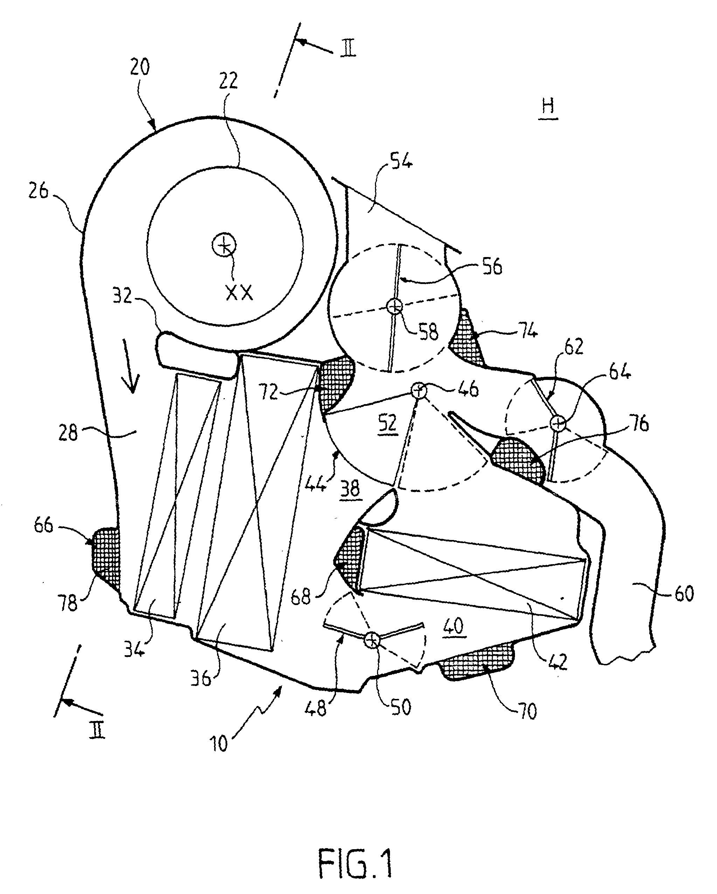

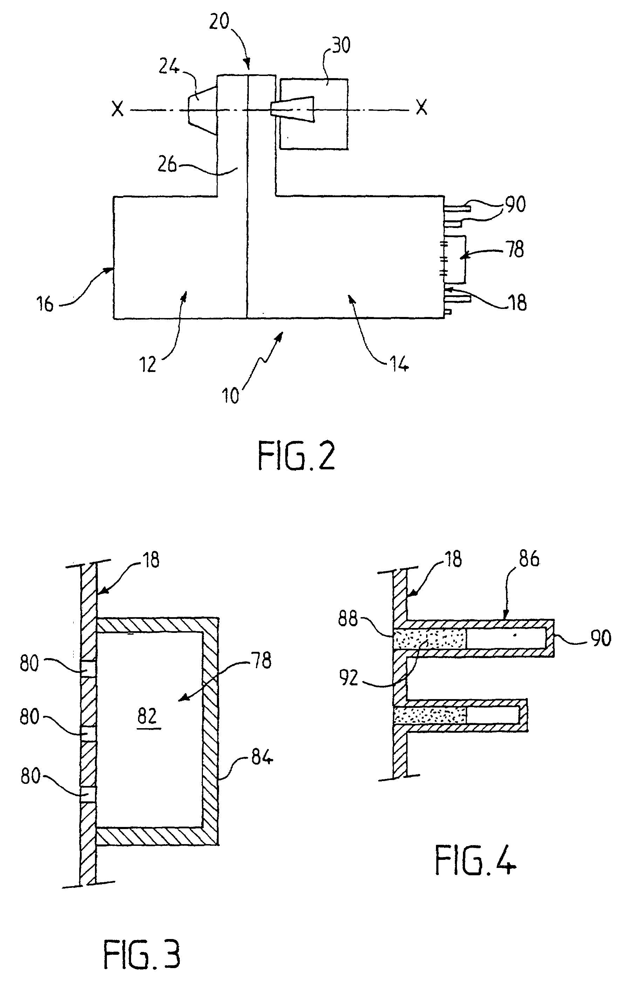

Sur les figures 1 et 2, la référence 10 désigne de façon générale un boîtier, encore appelé bloc, faisant partie d'un appareil de chauffage et/ou climatisation de l'habitacle H d'un véhicule automobile. Ce boîtier est obtenu par moulage d'une matière plastique et il comprend essentiellement deux moitiés 12 et 14 assemblées entre elles et présentant respectivement des parois latérales 16 et 18 sensiblement parallèles (figure 2). Ces parois 16 et 18 sont situées respectivement du côté gauche et du côté droit du véhicule.

Le boîtier 10 est connecté à la sortie d'un groupe moto-ventilateur 20 (figures 1 et 2) comprenant une turbine 22 entraînée en rotation autour d'un axe X-X par un moteur électrique 24. La turbine est logée à l'intérieur d'une enveloppe 26, encore appelée volute, qui se raccorde à un conduit d'entrée d'air 28 du boîtier.

Cette enveloppe 26 est reliée latéralement à un boîtier d'admission d'air 30 (figure 2) qui peut être alimenté soit par de l'air extérieur prélevé hors de l'habitacle H du véhicule, soit par de l'air recirculé prélevé à l'intérieur de l'habitacle, soit par un mélange des deux.

Lorsque la turbine est entraînée en rotation, de l'air est aspiré par la turbine et refoulé radialement pour être collecté par la volute 26 qui enveloppe circonférentiellement la turbine avec une section croissante. Cette volute est prolongée tangentiellement par une partie 32 dite bec de volute (figure 1).

Le conduit d'entrée d'air 28 du boîtier est alimenté par un flux d'air pulsé et il est situé en amont successivement d'un filtre à air 34 et d'un évaporateur de climatisation 36. Le flux d'air issu de l'évaporateur peut être réparti entre un conduit d'air froid 38 et un conduit d'air chaud 40 dans lequel est logé un échangeur de chaleur 42 constitué d'un radiateur. La répartition du flux d'air entre les conduits 38 et 40 s'effectue par l'intermédiaire d'un volet de mixage 44 du type tambour monté pivotant autour d'un axe 46 et d'un volet 48 du type papillon monté pivotant autour d'un axe 50 et contrôlant l'accès du conduit d'air chaud 40. En jouant sur la position des volets 44 et 48 on peut ajuster la température de l'air qui parvient dans une zone de mixage 52. Cette zone de mixage alimente un conduit de sortie 54, appelé conduit d'aération, desservant des bouches d'aération et contrôlé par un volet 56, appelé "volet d'aération", monté pivotant autour d'un axe 58.

La zone de mixage 52 alimente en outre un autre conduit de sortie (non représenté), appelé conduit de dégivrage, qui alimente des bouches situées vers la base du pare-brise du véhicule.

Enfin, la zone de mixage 52 alimente un conduit d'aération inférieur 60, encore appelé "conduit pieds", qui dessert des bouches de sortie situées vers la partie inférieure de l'habitacle. Ce conduit 60 est contrôlé par un volet 62 monté pivotant autour d'un axe 64.

La structure générale d'un tel boîtier est en elle-même connue. Elle permet d'envoyer sélectivement des flux d'air chaud et/ou refroidi en différentes régions de l'habitacle en fonction du confort thermique souhaité par les passagers.

Dans un tel boîtier, le flux d'air, froid ou réchauffé, est envoyé sous pression par le pulseur et est susceptible de générer de nombreux bruits, notamment dans les régions où sont localisées des sources acoustiques.

Dans le but de diminuer les bruits ainsi générés, l'invention propose de placer des moyens d'absorption de bruits d'écoulement dans des régions choisies du boîtier.

Ces moyens sont réalisés, dans l'exemple, sous la forme de résonateurs de Helmholtz et sont représentés par des zones hachurées ou grillagées sur la figure 1. On trouve tout d'abord des résonateurs dans une région 66 qui est située dans le conduit d'entrée 28, en amont de l'évaporateur 36 et également en amont du filtre à air 34.

Une autre région 68 est située à la jonction du conduit d'air froid 38 et du conduit d'air chaud 40, à proximité des zones d'évolution respectives du volet de mixage 44 et du volet 48 contrôlant la branche d'air chaud 40.

Une autre région 70 est située dans le conduit d'air chaud 40, et plus particulièrement entre la zone d'évolution du volet 48 et l'entrée du radiateur de chauffage 42.

Des résonateurs sont en outre placés dans les régions suivantes : région 72 entre les zones d'évolution respectives du volet de mixage 44 et du volet d'aération 56, région 74 entre les zones d'évolution du volet d'aération 56 et du volet 62, et enfin région 76 située entre les zones d'évolution respectives du volet de mixage 44 et du volet 62.

On se réfère maintenant plus particulièrement à la figure 2 pour décrire la structure d'un résonateur de Helmholtz 78 qui est ici celui correspondant à la région 66 précitée.

Ce résonateur est prévu sur la paroi latérale 18 du boîtier et il comprend une pluralité d'orifices 80 (figures 2 et 3) qui traversent chacun la paroi 18 en formant un col et qui communiquent avec une cavité 82 formée à l'extérieur du boîtier, en étant délimité par la paroi 18 et une paroi rapportée 84. La cavité 82 est adjacente à la paroi latérale 018 et elle est pratiquement fermée à l'exception des orifices 80. Ces orifices 80 forment un col de section transversale A choisie et de longueur corrigée L' choisie, tandis que la cavité 82 possède un volume V choisi, de telle sorte que la fréquence sonore absorbée F soit définie par la relation suivante :

$$F = \frac{C}{2\Pi} \sqrt{\frac{A}{VxL'}}$$

dans laquelle C désigne la vitesse de l'onde sonore.

En choisissant de façon convenable la valeur des paramètres A, L' et V, on peut déterminer la ou les fréquences sonores à absorber.

Bien entendu, les résonateurs prévus dans les autres régions 68 à 76 sont réalisés de manière similaire.

Il est possible aussi de prévoir des résonateurs sur l'autre paroi latérale 16.

Dans l'exemple, la longueur des orifices 80 correspond à l'épaisseur de la paroi 18 qui est de l'ordre de 2 mm.

En complément des moyens d'absorption de bruits d'écoulement (ici des résonateurs de Helmholtz), il est possible de prévoir des tubes quart d'onde 86 comme représenté sur la figure 2 et le détail de la figure 4.

Ces tubes sont venus de moulage avec le boîtier, plus particulièrement avec la moitié 14 du boîtier. Chaque tube quart d'onde 86 s'étend vers l'extérieur du boîtier et comprend une extrémité ouverte 88 débouchant dans la paroi 18 du boîtier et une extrémité opposée fermée 90. Chaque tube s'étend sur une longueur L choisie telle que la fréquence absorbée F0 soit définie par la relation suivante :

$$F0 = \frac{C}{4L}$$

dans laquelle C désigne la vitesse de l'onde sonore.

Il est possible de prévoir des tubes identiques ou différents, en fonction de la ou des fréquences sonores à absorber.

De façon facultative, les tubes quart d'onde peuvent être remplis, au moins en partie, d'un matériau absorbant 92 (figure 4) tel que, par exemple, une mousse à cellules ouvertes.

Ce matériau facilite l'écoulement de l'air le long de la face intérieure de la paroi 18 et empêche ainsi la génération de petites turbulences.

En outre, la présence de ce matériau ne fait pas obstacle à l'absorption exercée par les tubes quart d'onde.

Bien entendu, l'invention n'est pas limitée à la forme de réalisation décrite précédemment à titre d'exemple et s'étend à d'autres variantes.

Ainsi, on comprendra que les moyens d'absorption de bruits d'écoulement peuvent être situés sur l'une et/ou l'autre des parois latérales du boîtier, et éventuellement sur des parois transversales, dans des régions où sont localisées les sources acoustiques.

Les orifices faisant communiquer une cavité avec l'intérieur du boîtier peuvent avoir des formes très différentes, et il peut s'agir aussi de fentes.

Egalement, les tubes quart d'onde, dont la présence est facultative, sont avantageusement situés à proximité des moyens d'absorption de bruits d'écoulement, mais peuvent aussi être situés en d'autres endroits.

De plus les moyens d'absorption ne sont pas limités à des résonateurs de Helmholtz.

L'invention permet ainsi d'améliorer considérablement les performances acoustiques du boîtier de chauffage et/ou climatisation en réduisant les bruits émis par les turbulences du flux d'air traversant le boîtier.

**Revendications**

1. Boîtier de chauffage et/ou climatisation de véhicule automobile, comprenant des parois (16, 18) délimitant des conduits de circulation d'un flux d'air pulsé, au moins un échangeur de chaleur (42, 36) propre à réchauffer ou refroidir le flux d'air, et des volets de distribution (44, 48, 56, 62) logés dans le boîtier pour contrôler le flux d'air dans les conduits de circulation, **caractérisé en ce que** l'une au moins des parois du boîtier (10) comporte des moyens d'absorption de bruits d'écoulement (78) prévus dans des régions localisées au voisinage des volets de distribution, et **en ce que** ces moyens d'absorption de bruits d'écoulement comprennent une cavité (82) adjacente à ladite paroi et communiquant avec l'intérieur du boîtier par des orifices (80) traversant celle-ci, la cavité étant pratiquement fermée à l'exception des orifices.

2. Boîtier selon la revendication 1, obtenu par moulage d'une matière plastique, **caractérisé en ce que** les moyens d'absorption de bruits d'écoulement (78) sont prévus sur au moins une paroi latérale (18) du boîtier (10), qui s'étend transversalement au sens de démoulage.

3. Boîtier selon l'une des revendications 1 et 2, **caractérisé en ce que** les moyens d'absorption de bruits d'écoulement (78) sont réalisés sous la forme de résonateurs de Helmholtz dans lesquels les orifices (80) traversent chacun la paroi (18) en formant un col qui communique avec la cavité (82) formée à l'extérieur du boîtier (10).

4. Boîtier selon la revendication 3, **caractérisé en ce que** les orifices (80) forment un col de section transversale A choisie, de longueur L' choisie, et **en ce que** la cavité (82) possède un volume V choisi, de telle sorte que la fréquence sonore absorbée F soit définie par la relation suivante :

$$F = \frac{C}{2\Pi} \sqrt{\frac{A}{VxL}},$$

dans laquelle C désigne la vitesse de l'onde sonore.

5. Boîtier selon la revendication 4, **caractérisé en ce que** la longueur du col correspond à l'épaisseur de la paroi (18) et est de l'ordre de 2 mm.

6. Boîtier selon l'une des revendications 1 à 5, **caractérisé en ce que** l'une au moins des parois latérales (16, 18) du boîtier (10) comporte en outre des tubes quart d'onde (86) situés de préférence à proximité des moyens d'absorption de bruits d'écoulement (78).

7. Boîtier selon la revendication 6, **caractérisé en ce que** chaque tube quart d'onde (86) s'étend vers l'extérieur du boîtier (10) et comprend une extrémité ouverte (88) débouchant dans la paroi (18) du boîtier, et une extrémité opposée fermée (90).

8. Boîtier selon l'une des revendications 6 et 7, **caractérisé en ce que** les tubes quart d'onde (86) sont remplis au moins en partie d'un matériau absorbant (92), en particulier d'une mousse à cellules ouvertes.

9. Boîtier selon l'une des revendications 5 à 8, **caractérisé en ce que** chaque tube quart d'onde (86) s'étend sur une longueur L' choisie, telle que la fréquence absorbée F0 soit définie par la relation suivante :

$$F0 = \frac{C}{4L}$$

dans laquelle C désigne la vitesse de l'onde sonore.

**Patentansprüche**

1. Kraftfahrzeugsheiz- und/oder Klimagehäuse, umfassend, Wandungen (16, 18), die Zirkulationskanäle einer beaufschlagten Luftströmung begrenzen, zumindest einen Wärmetauscher (42, 36), der die Luftströmung erwärmen oder abkühlen kann, und Verteilungsklappen (44, 48, 56, 62), die in dem Gehäuse aufgenommen sind, um die Luftströmung in den Zirkulationskanälen zu steuern, **dadurch gekennzeichnet, daß** zumindest eine der Wandungen des Gehäuses (10) Strömungsgeräusch-Absorbtionsmittel (78) umfaßt, vorgesehen in Bereichen, die benachbart der Verteilungsklappen angeordnet sind, und daß die Strömungsgeräusch-Absorbtionsmittel einen Hohlraum (82) umfassen, benachbart zu der Wandung und mit dem Inneren des Gehäuses über Öffnungen (80) in Verbindung stehend, die die Wandung durchqueren, wobei der Hohlraum mit Ausnahme der Öffnungen praktisch geschlossen ist.

2. Gehäuse nach Anspruch 1, erhalten durch Formen oder Gießen eines Kunststoffmaterials, **dadurch gekennzeichnet, daß** die Strömungsgeräusch-Absorbtionsmittel (78) an zumindest einer Lateralwandung (18) des Gehäuses (10) vorgesehen sind, die sich quer zur Entformungsrichtung erstreckt.

3. Gehäuse nach einem der Ansprüche 1 und 2, **dadurch gekennzeichnet, daß** die Strömungsgeräusch-Absorbtionsmittel (78) in der Form von Helmholtzresonatoren ausgebildet sind, bei welchen die Öffnungen (80) jeweils die Wandung (18) unter Ausbildung eines Kragens durchqueren, der mit dem äußerlich des Gehäuses (10) ausgebildeten Hohlraum (82), in Verbindung steht.

4. Gehäuse nach Anspruch 3, **dadurch gekennzeichnet, daß** die Öffnungen (80) einen Kragen mit gewähltem Querschnitt A, gewählter Länge L' ausbilden, und daß der Hohlraum (82) ein gewähltes Volumen V aufweist, so daß die absorbierte Geräuschfrequenz F bestimmt ist durch die folgende Gleichung:

$$F = \frac{C}{2\pi} \sqrt{\frac{A}{VxL}},$$

wobei C die Geschwindigkeit der Schallwelle beziffert.

5. Gehäuse nach Anspruch 4, **dadurch gekennzeichnet, daß** die Länge des Kragens der Dicke der Wandung (18) entspricht und in etwa 2 mm ausmacht.

6. Gehäuse nach einem der Ansprüche 1 bis 5, **dadurch gekennzeichnet, daß** zumindest eine der Lateralwandungen (16, 18) des Gehäuses (10) ferner Viertelwellenrohre (86) umfaßt, insbesondere bevorzugt angeordnet benachbart zu Strömungsgeräusch-Absorbtionsmitteln (78).

**7.** Gehäuse nach Anspruch 6, **dadurch gekennzeichnet, daß** jedes Viertelwellenrohr (86) sich hin zu dem Äußeren des Gehäuses (10) erstreckt und ein offenes Ende (88) umfaßt, welches in der Wandung (18) des Gehäuses mündet, sowie ein gegenüberliegendes geschlossenes Ende (90).

**8.** Gehäuse nach einem der Ansprüche 6 und 7, **dadurch gekennzeichnet, daß** die Viertelwellenrohre (86) zumindest teilweise mit einem absorbierenden Material (92), insbesondere mit einem Schaum mit offenen Zellen gefüllt sind.

**9.** Gehäuse nach einem der Ansprüche 5 bis 8, **dadurch gekennzeichnet, daß** jedes Viertelwellenrohr (86) sich über eine gewählte Länge L' erstreckt, so daß die absorbierte Frequenz F0 definiert wird durch die folgende Gleichung:

$$F0 = \frac{C}{4L}$$

wobei C die Schallwellengeschwindigkeit beziffert.

**Claims**

**1.** A motor vehicle heating and/or air conditioning unit, including walls (16, 18) defining ducts for flow of a blown air stream, at least one heat exchanger (42, 36) for heating or cooling the air stream, and distribution valves (44, 48, 56, 62) mounted within the casing of the unit for controlling the flow of air into the flow ducts, **characterised in that** at least one of the walls of the casing (10) includes flow noise absorbing means (78) arranged in local regions close to the distribution valves, and **in that** the said flow noise absorbing means comprise a cavity (82) adjacent to the said wall and in communication with the interior of the casing via orifices (80) formed through the latter, the cavity being effectively closed except at the orifices.

**2.** A unit according to Claim 1 moulded in a plastics material, **characterised in that** the flow noise absorbing means (78) are disposed on at least one side wall (18) of the casing (10) that is transverse to the direction of stripping from the mould.

**3.** A unit according to Claim 1 or Claim 2, **characterised in that** the flow noise absorbing means (78) are made in the form of Helmholtz resonators in which each orifice (80) extends through the wall to define a nozzle which communicates with the cavity (82) defined on the outside of the casing (10).

**4.** A unit according to Claim 3, **characterised in that** the orifices (80) constitute a nozzle having a predetermined transverse cross section A and a predetermined length L', and **in that** the cavity (82) has a predetermined volume V such that the absorbed sonic frequency F is defined by the following relationship:

$$F = (C/2\Pi) \; \sqrt{(A/V.L')}$$

where C is the velocity of the sound wave.

**5.** A unit according to Claim 4, **characterised in that** the length of the nozzle corresponds to the thickness of the wall (18), and is of the order of 2 mm.

**6.** A unit according to one of Claims 1 to 5, **characterised in that** at least one of the side walls (16, 18) of the casing (10) further includes quarter-wave tubes (86) which are preferably situated close to the flow noise absorbing means (78).

**7.** A unit according to Claim 6, **characterised in that** each quarter-wave tube (6) extends outwardly of the casing (10) and has an open end (88) which is open in the wall (18) of the casing, and a closed opposite end (90).

**8.** A unit according to Claim 6 or Claim 7, **characterised in that** the quarter-wave tubes (86) are at least partly filled with an absorbent material (92), in particular a porous foam.

**9.** A unit according to one of Claims 5 to 8, **characterised in that** each quarter-wave tube (6) is of a predetermined length L such that the absorbed frequency F0 is defined by the following relationship:

$$F0 = C/4L,$$

where C is the velocity of the sound wave.

FIG.1

FIG.2

FIG.3

FIG.4